# EUROPÄISCHE PATENTANMELDUNG

(11) **EP 2 073 023 A2**
(43) Veröffentlichungstag der Anmeldung: **24.06.2009**
(21) Anmeldenummer: 08105758.0
(22) Anmeldetag: 11.11.2008
(51) Int. Cl.: G01P 15/08, G01P 15/125

(54) **Mikromechanisches Bauelement mit auslenkfähigem Element**

(30) Priorität: 19.12.2007 DE 102007061096
(71) Anmelder: ROBERT BOSCH GMBH, 70442 Stuttgart (DE)
(72) Erfinder: Scheuerer, Roland, 72768, Reutlingen (DE); Tebje, Lars, 72770, Reutlingen (DE); Weber, Heribert, 72622, Nuertingen (DE)

(57) **Zusammenfassung**

Es wird ein mikromechanisches Bauelement mit einem auslenkfähigen Element vorgeschlagen. Das auslenkfähige Element ist dabei mittels eines Aufhängungselements mit einem Substratmaterial verbunden. Das Aufhängungselement ist bezüglich der Haupterstreckungsebene des Substratmaterials beziehungsweise des mikromechanischen Bauelements symmetrisch angeordnet.

## Beschreibung

### Stand der Technik

Die Erfindung geht aus von einem mikromechanischen Bauelement nach der Gattung des Hauptanspruchs. Aus der Druckschrift DE 195 41 388 A1 ist ein Beschleunigungssensor bekannt, der eine Wippe aufweist. Die Wippe ist dabei mit einem Wafer so über Torsionsstege verbunden, dass eine asymmetrische und außerhalb des Schwerpunkts der Wippe verlaufende Drehachse gebildet wird. Nachteilig bei dem Beschleunigungssensor ist, dass bei einer differentialkapazitiven Bestimmung der Auslenkung der Wippe die asymmetrische Aufhängung der Wippe zu Messungenauigkeiten führt.

### Offenbarung der Erfindung

Das erfindungsgemäße mikromechanische Bauelement gemäß dem Hauptanspruch beziehungsweise den Merkmalen der nebengeordneten Ansprüche hat demgegenüber den Vorteil, dass keine asymmetrische Aufhängung des auslenkfähigen Elements vorgesehen sein muss. Insbesondere bei einer unkomplizierten differentialkapazitiven Bestimmung der Auslenkung des auslenkfähigen Elements kann so vorteilhaft die Messgenauigkeit und die Messempfindlichkeit des mikromechanischen Bauelements verbessert werden.

Erfindungsgemäß wird das auslenkfähige Element durch eine Ebene in einen ersten Teilbereich und in einen zweiten Teilbereich unterteilt. Die Ebene verläuft dabei im Wesentlichen senkrecht zur Haupterstreckungsebene des auslenkfähigen Elements und im Wesentlichen mittig durch das Aufhängungselement. Der erste Teilbereich weist ein größeres Massenträgheitsmoment auf als der zweite Teilbereich. In einer ersten Ausführungsform wird die Grundfläche des auslenkfähigen Elements, die zum Substratmaterial hin angeordnet ist, durch die Ebene in zwei im Wesentlichen gleich große Flächenbereiche geteilt. Da die Ebene mittig durch das Aufhängungselement verläuft, wird das Aufhängungselement im Wesentlichen symmetrisch zur Grundfläche angeordnet. Die Ebene steht dabei im Wesentlichen senkrecht auf der Grundfläche des auslenkfähigen Elements. In diesem Fall weist der erste Teilbereich und der zweite Teilbereich im Mittel den gleichen Abstand zu einer Drehachse auf. Die unterschiedlichen Massenträgheitsmomente des ersten und des zweiten Teilbereichs können dabei auf Grund einer anderen Außenkontur des ersten Teilbereichs gegenüber dem zweiten Teilbereich entstehen und/oder durch das Vorliegen von unterschiedlichen Materialdichten im ersten Teilbereich gegenüber dem zweiten Teilbereich und/oder durch unterschiedliche Massen des ersten und des zweiten Teilbereichs. Bevorzugt weist der erste Teilbereich eine Höhe senkrecht zur Haupterstreckungsebene des auslenkfähigen Elements auf, die größer ist als die Höhe des zweiten Teilbereichs senkrecht zur Haupterstreckungsebene des auslenkfähigen Elements. Vorzugsweise entsteht so eine Stufe im auslenkfähigen Element. Der erste Teilbereich weist dabei in diesem Fall eine größere Masse als der zweite Teilbereich auf, wenn die Materialdichten des ersten Teilbereichs und des zweiten Teilbereichs im Wesentlichen gleich sind.

Vorzugsweise ist die Auslenkung des auslenkfähigen Elements mittels einer Differenzkapazitätsmessung bestimmbar.

Dem Fachmann ist klar, dass eine Abstandsänderung zwischen einer Elektrode und einer Gegenelektrode eine Kapazitätsänderung bewirkt, die als Differenzkapazität mittels einer geeigneten Auswerteelektronik verarbeitet werden kann. Der Fachmann versteht hierrunter eine Differenzkapazitätsmessung.

Bevorzugt weist das mikromechanische Bauelement ein Abdeckungselement auf. Als Abdeckungselement kann beispielsweise ein Kappenwafer verwendet werden.

Bei einer anderen Ausführungsform der Erfindung weist das mikromechanische Bauelement ebenfalls ein auslenkfähiges Element auf, wobei auch hier das auslenkfähige Element mittels eines Aufhängungselements mit einem Substratmaterial verbunden ist. Das mikromechanische Bauelement weist ein Abdeckungselement auf, wobei die Auslenkung des auslenkfähigen Elements mittels einer Differenzkapazitätsmessung bestimmbar ist. Das Abdeckungselement weist hierzu eine leitfähige Schicht als Gegenelektrode auf. Bevorzugt bildet das auslenkfähige Element und/oder ein Substratmaterial beziehungsweise eine Schicht auf dem auslenkfähigen Element und/oder dem Substratmaterial eine Elektrode, so das ein Elektrode-Gegenelektroden-Paar mit dem Abdeckungselement entsteht.

Das auslenkfähige Element weist in der eben genannten anderen Ausführungsform ebenfalls einen ersten Teilbereich und einen zweiten Teilbereich auf, wobei der erste Teilbereich ein größeres Massenträgheitsmoment aufweist als der zweite Teilbereich.

Vorzugsweise teilt die Ebene die Grundfläche in zwei im Wesentlichen gleich große Flächenbereiche oder die Ebene teilt die Grundfläche in zwei unterschiedlich große Flächenbereiche. Bei einer Teilung der Grundfläche in zwei unterschiedlich große Flächenbereiche ist das Aufhängungselement asymmetrisch bezüglich der Grundfläche des schwingfähigen Elements angeordnet. Das auslenkfähige Element ist folglich asymmetrisch an dem Substratmaterial aufgehängt.

Wird die Grundfläche des schwingfähigen Elements in zwei gleich große Flächenbereiche geteilt, wird das unterschiedliche Massenträgheitsmoment bevorzugt wie bei der ersten Ausführungsform gebildet. Bei einer asymmetrischen Aufhängung des auslenkfähigen Elements entsteht das unterschiedliche Massenträgheitsmoment bevorzugt dadurch, dass der erste Teilbereich im Mittel weiter von der Drehachse entfernt ist als der zweite Teilbereich. Bevorzugt weist dabei der erste Teilbereich und der zweite Teilbereich im Wesentlichen die gleiche Materialdichte auf, der erste Teilbereich weist jedoch eine Masse auf, die mindestens der Masse des zweiten Teilbereichs entspricht.

Die nachfolgenden Ausführungsbeispiele gelten für beide Ausführungsformen des mikromechanischen Bauelements gleichermaßen.

Bevorzugt weist das mikromechanische Bauelement eine Rückseitenkontaktierung auf. Bezüglich der Rückseitenkontaktierung soll auf die eingereichte aber bisher unveröffentlichte Anmeldung mit dem Aktenzeichen DE 10 2007 019 638.7 verwiesen werden. Die Anmeldung wird hiermit als Referenz eingeführt und gilt als Teil der Offenbarung. Die Rückseitenkontaktierung des mikromechanischen Bauelements ermöglicht vorteilhaft die Verwendung von unstrukturierten Abdeckungselementen zur Abdeckung des mikromechanischen Bauelements. Beispielsweise kann als Abdeckungselement ein unstrukturierter Pyrex-Wafer verwendet werden. Trotz des unstrukturierten Wafers ist durch die Rückseitenkontaktierung eine elektrische Kontaktierung des mikromechanischen Bauelements möglich. Die Herstellung eines Abdeckungselements wird somit vorteilhaft vereinfacht. Zudem erfolgt die Rückseitenkontaktierung in der Regel durch eine Rückdünnung einer Vorstufe des mikromechanischen Bauelements, wodurch vorteilhaft die Höhe des mikromechanischen Bauelements verringert wird.

Vorzugsweise weist das mikromechanische Bauelement eine erste und/oder eine zweite Funktionsschicht auf. Die erste und/oder die zweite Funktionsschicht sind bevorzugt Epitaktische-Polysiliziumschichten. Bezüglich eines mikromechanischen Bauelements mit zwei Funktionsschichten beziehungsweise mit zwei Auffüllschichten soll auf die eingereichte, aber bisher unveröffentlichte Anmeldung mit dem Aktenzeichen DE 10 2007 019 647.6 verwiesen werden, die hiermit als Referenz eingeführt wird und als Teil der Offenbarung angesehen werden soll.

Bevorzugt ist das mikromechanische Bauelement mittels eines Kontaktmittels in Kontakt mit dem Abdeckungselement. Vorzugsweise ist das Kontaktmittel leitfähige. Weist das Abdeckungselement eine leitfähige Schicht auf oder ist selber aus leitfähigem Material hergestellt, so kann durch das leitfähige Kontaktmittel eine elektrische Kontaktierung der leitfähigen Schicht hergestellt werden. Beispielsweise kann das Kontaktmittel mit der leitfähigen Schicht des Abdeckungselements und mit einem Bondrahmen verbunden sein, wobei der Bondrahmen elektrisch kontaktiert ist. Bevorzugt ist jedoch auch die Verwendung von nicht leitfähigem Material als Kontaktmittel möglich. Weiterhin ist bevorzugt auch die direkte Anbringung des Abdeckungselements an dem mikromechanischen Bauelement, beispielsweise durch anodisches Bonden, möglich. Bei einer weiteren Variante ist es zudem möglich, den Bondrahmen elektrisch nicht zu kontaktieren, sondern den Kontakt zur leitfähigen Schicht des Abdeckungselements innerhalb, des durch den Bondrahmen umschlossenen Bereichs, zu realisieren. Als Kontaktmittel wird bevorzugt ein Material oder eine Materialkombination gewählt, deren Schmelztemperatur und/oder deren eutektischer Punkt im Temperaturbereich von etwa 170 °C - 600 °C liegt.

Das mikromechanische Bauelement ist bevorzugt als Beschleunigungssensor verwendbar. Der Fachmann versteht, dass die Beschleunigung durch die auf das auslenkfähige Element wirkende Trägheitskraft bestimmt wird. Besonders bevorzugt handelt es sich um einen Z-Beschleunigungssensor.

Ein weiterer Gegenstand der vorliegenden Erfindung ist ein Verfahren zur Herstellung des mikromechanischen Bauelements. Hierbei wird ausgehend von einer ersten Seite eines Substratmaterials eine erste Isolationsschicht und/oder eine erste Kontaktierungsschicht erzeugt, wobei zumindest teilweise über der ersten Isolationsschicht und/oder über der ersten Kontaktierungsschicht eine Schutzschicht erzeugt wird. Über der ersten Isolationsschicht und/oder der ersten Kontaktierungsschicht und der Schutzschicht werden eine erste Funktionsschicht, eine erste Maskenschicht und eine zweite Funktionsschicht erzeugt. Die Maskenschicht liegt hierbei zwischen der ersten und der zweiten Funktionsschicht und die erste Funktionsschicht liegt - von einer ersten Seite des Substratmaterials aus gesehen - unter der zweiten Funktionsschicht. In vorteilhafter Weise kann so eine "vergrabene Maske" gebildet werden, mittels der beispielsweise das größere Massenträgheitsmoment des ersten Teilbereichs gegenüber dem Massenträgheitsmoment des zweiten Teilbereichs gebildet werden kann.

Bevorzugt wird auf Teilbereichen der zweiten Funktionsschicht eine zweite Kontaktierungsschicht gebildet und/oder es wird zumindest auf Abschnitten eine zweite Maskenschicht auf der zweiten Funktionsschicht und/oder über der zweiten Kontaktierungsschicht erzeugt. In vorteilhafter Weise ist durch die zweite Kontaktierungsschicht somit eine weitere Kontaktierungsmöglichkeit des mikromechanischen Bauelements möglich.

Weiterhin bevorzugt werden bei einem Trenchprozess Trenchstrukturen erzeugt, wobei der Trenchprozess durch das Erreichen der ersten Maskenschicht und/oder durch das Erreichen der Schutzschicht gestoppt wird. In vorteilhafter Weise kann beim Trenchprozess so beispielsweise das unterschiedliche Massenträgheitsmoment des ersten und des zweiten Teilbereichs gebildet werden, da einige (nicht durch die zweite Maskenschicht abgedeckte) Abschnitte der zweiten Funktionsschicht durch den Trenchprozess abgetragen und andere (durch die zweite Maskenschicht abgedeckte) Abschnitte nicht durch den Trenchprozess abgetragen werden. Vorzugsweise werden bei dem Trenchprozess auch Abschnitte der ersten und/oder der zweiten Funktionsschicht, die später das auslenkfähige Element bilden, gezielt perforiert.

Vorzugsweise folgt nach dem Trenchprozess ein Ätzschritt, wobei zumindest teilweise bei dem Ätzschritt die Schutzschicht entfernt wird. Durch die Entfernung der Schutzschicht wird dabei bevorzugt das auslenkfähige Element auslenkbar. Die Entfernung der Schutzschicht unterhalb des zu bildenden auslenkfähigen Elements wird dabei durch die Perforierung der ersten und/oder der zweiten Funktionsschicht erleichtert.

Weiterhin bevorzugt wird ein Abdeckungselement direkt oder indirekt auf oder mit der ersten oder auf oder mit der zweiten Funktionsschicht befestigt. Unter einer indirekten Befestigung des Abdeckungselements soll dabei verstanden werden, wenn das Abdeckungselement mittels eines Kontaktmittels mit der ersten oder der zweiten Funktionsschicht verbunden wird. Vorzugsweise weist das Abdeckungselement eine leitfähige Schicht, beispielsweise Aluminium, auf. Denkbar ist jedoch auch, dass das Abdeckungselement keine leitfähige Schicht aufweist. Das Abdeckungselement ist bevorzugt ein Pyrex-Kappenwafer und/oder ist strukturiert oder nicht strukturiert.

### Kurze Beschreibung der Zeichnungen

Ausführungsbeispiele der Erfindung sind in den Zeichnungen dargestellt und in der nachfolgenden Beschreibung näher erläutert.

In den Figuren 1 bis 6 ist schematisch eine erste Ausführungsform einer Vorstufe eines mikromechanischen Bauelements dargestellt.

In der Figur 7 ist schematisch eine zweite Ausführungsform einer Vorstufe des mikromechanischen Bauelements dargestellt.

In der Figur 8 ist schematisch eine Vorstufe der ersten Ausführungsform des mikromechanischen Bauelements mit einem Abdeckungselement und Rückseitenkontaktierung dargestellt.

In den Figuren 9 bis 16 ist schematisch ein Verfahren zur Herstellung eines mikromechanischen Bauelements mit Rückseitenkontaktierung und verschiedenen Elektrodenkonfigurationen/- ausführungen dargestellt.

In Figur 17 ist schematisch eine Ausführungsform eines auslenkfähigen Elements mit unterschiedlichen Massenträgheitsmomenten in einem ersten Teilbereich und in einem zweiten Teilbereich dargestellt.

### Ausführungsform(en) der Erfindung

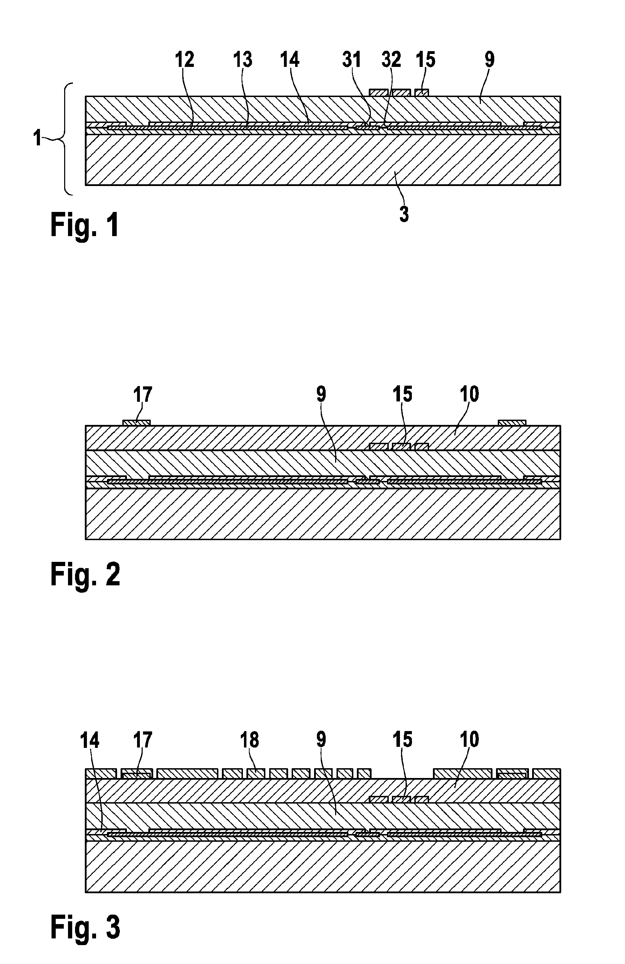

In Figur 1 ist schematisch eine Vorstufe 1 eines mikromechanischen Bauelements dargestellt, wobei die Vorstufe 1 ein Substratmaterial 3, eine erste Isolationsschicht 12 und eine erste Kontaktierungsschicht 13 aufweist. Die erste Isolationsschicht 12 und die erste Kontaktierungsschicht 13 sind dabei bevorzugt auf einer ersten Seite des Substratmaterials 3 erzeugt worden. Im Ausführungsbeispiel ist die erste Isolationsschicht 12 im Wesentlichen vollflächig auf dem Substratmaterial erzeugt worden. Die erste Kontaktierungsschicht 13 ist über Abschnitte der ersten Isolationsschicht 12 erzeugt worden. Hierdurch entstehen Ausnehmungen 32 in der ersten Kontaktierungsschicht 13. Weiterhin wurde zumindest über Abschnitte der ersten Isolationsschicht 12 und/oder der ersten Kontaktierungsschicht 13 eine Schutzschicht 14 erzeugt, die ebenfalls Ausnehmungen 31 aufweist. Die Schutzschicht 14 gelangt dabei in die Ausnehmungen 32 der ersten Kontaktierungsschicht. Über der Schutzschicht 14 und/oder der Kontaktierungsschicht 13 wird eine erste Funktionsschicht 9 erzeugt. Auf der ersten Funktionsschicht 9 wiederum wird abschnittsweise eine erste Maskenschicht 15 erzeugt. Bevorzugt ist das Substratmaterial 3 Silizium, die erste Isolationsschicht 12 Siliziumoxid, die erste Kontaktierungsschicht 13 Polysilizium, die Schutzschicht 14 Siliziumoxid, die erste Funktionsschicht 9 EPI (epitaktisches Polysilizium) und die erste Maskenschicht 15 Siliziumoxid.

In der Figur 2 ist schematisch dargestellt, dass eine zweite Funktionsschicht 10 über der ersten Maskenschicht 15 und der ersten Funktionsschicht 9 erzeugt wurde. Auch die zweite Funktionsschicht 10 besteht bevorzugt aus EPI. Die erste Maskenschicht 15 wird durch die zweite Funktionsschicht 10 vergraben. Über der zweiten Funktionsschicht 10 wird bevorzugt abschnittsweise eine zweite Kontaktierungsschicht 17 erzeugt. Sowohl die Funktionsschichten 9 und 10 als auch die Kontaktierungsschicht 13, können dotiert und/oder undotiert abgeschieden werden.

Wie in Figur 3 schematisch dargestellt wird über Abschnitte der zweiten Funktionsschicht 10 und über der zweiten Kontaktierungsschicht 17 eine zweite Maskenschicht 18 erzeugt. Durch die Abschnitte der zweiten Funktionsschicht 10, die nicht von der zweiten Maskenschicht 18 abgedeckten werden, können später vorteilhaft Trenchstrukturen in der Vorstufe 1 des mikromechanischen Bauelements und gezielte Perforation beziehungsweise perforierten Bereiche 22 im herzustellenden auslenkfähigen Element 2 erzeugt werden. Durch die perforierten Bereiche 22 kann dabei vorteilhaft in einem nachfolgenden Ätzschritt die Schutzschicht 14 einfacher entfernt werden.

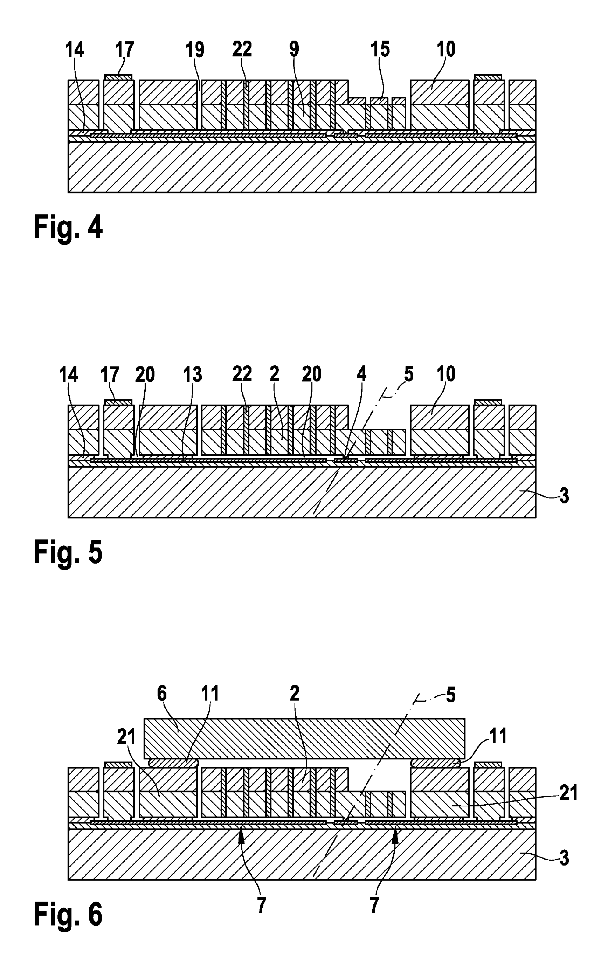

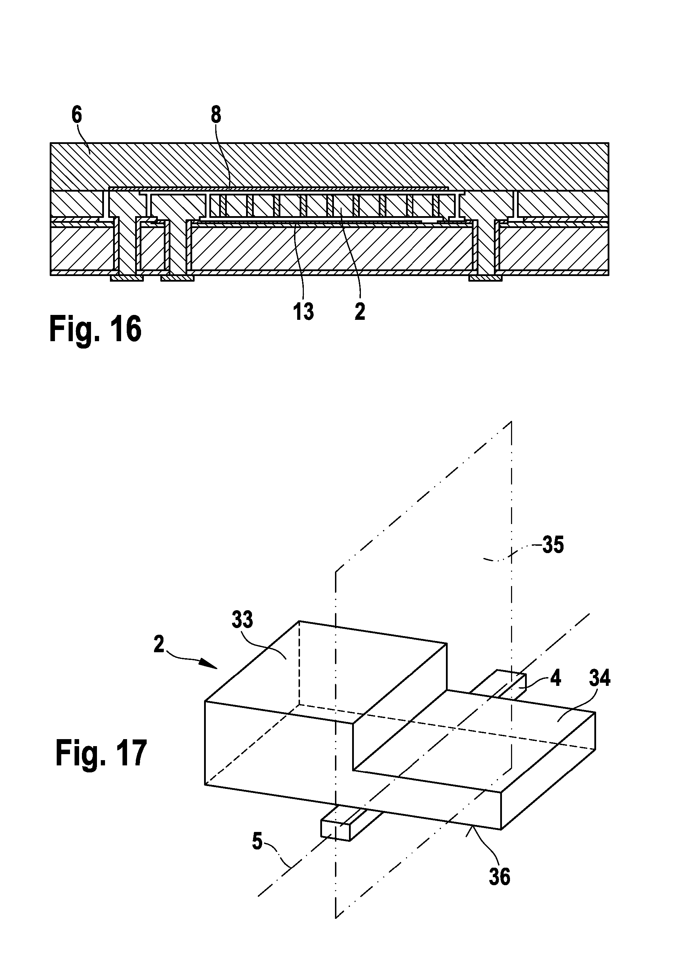

Nach einem Trenchprozess, schematisch dargestellt in Figur 4, sind Trenchstrukturen 19 entstanden. Weiterhin sind die perforierten Bereiche 22 entstanden. Der Trenchprozess stoppt dabei auf der ersten Maskenschicht 15 beziehungsweise der Schutzschicht 14. Die zweite Maskenschicht 18 ist nach dem Trenchprozess bevorzugt vollständig, zum Beispiel durch ein Sauerstoffplasma, entfernt worden. In Figur 5 ist die Vorstufe 1 des mikromechanischen Bauelements nach einem Ätzschritt dargestellt. Bei dem Ätzschritt handelt es sich bevorzugt um eine HF-Gasphasenätzung. Durch das Ätzmittel ist dabei vorzugsweise die Schutzschicht 14 aus den Gebieten 20 entfernt und die erste Maskenschicht 15 abgetragen worden. Durch die Ausnehmung 31 der Schutzschicht 14 ist hierbei ein Aufhängungselement 4 gebildet worden. Weiterhin ist durch die Entfernung der Schutzschicht 14 ein auslenkfähiges Element 2 entstanden, da das auslenkfähige Element 2 lediglich durch das Aufhängungselement 4 mit dem Substratmaterial 3 beziehungsweise mit der ersten Kontaktierungsschicht 13 in Kontakt steht. Das auslenkfähige Element 2 ist dabei um eine Drehachse 5 auslenkbar, die durch das Aufhängungselement 4 verläuft. Die Drehachse 5 ist in der Figur 5 schematisch angedeutet und verläuft senkrecht zur Zeichenebene. Die Figuren 1 bis 16 stellen ansonsten Schnittdarstellungen der Vorstufe 1 des mikromechanischen Bauelements dar. Durch die erste Maskenschicht 15, die nur auf Abschnitte der ersten Funktionsschicht 9 erzeugt wurde, weist das auslenkfähige Element 2 einen ersten Teilbereich 33 (nur in Figur 17 dargestellt) mit einem größeren Massenträgheitsmoment auf, als in einem zweiten Teilbereich 34 (nur in Figur 17 dargestellt) des auslenkfähigen Elements 2 vorliegt.

In den Figuren 1 bis 16 ist in der Schnittdarstellung das Aufhängungselement 4 nicht zentrisch zum schwingfähigen Element 2 angeordnet. Es soll jedoch deutlich werden, dass je nach Ausgestaltung des schwingfähigen Elements (beispielsweise mit einer Stufe, wie in Figur 6 dargestellt) das Aufhängungselement 4 im Wesentlichen zentrisch zu einer Grundfläche 36 des schwingfähigen Elements 2 angeordnet werden kann, wie in Figur 17 schematisch dargestellt. Diese Grundfläche 36 ist dabei dem Substratmaterial 3 zugewandt und wird durch das Aufhängungselement 4 beziehungsweise eine Ebene 35 geteilt. Bei einer zentrischen Anordnung des Aufhängungselements 4 an dem schwingfähigen Element 2 sind dabei die Flächenbereiche der Grundfläche 36, die durch das Aufhängungselement 4 geteilt werden, im Wesentlichen gleich groß. Bevorzugt entscheidet die Ausbildung der Stufe über die genaue Position des Aufhängungselements 4.

In Figur 6 ist das mikromechanische Bauelement mit einem Abdeckungselement 6 dargestellt. Das Abdeckungselement 6 ist dabei mittels eines Kontaktmittels 11 mit Stützen 21 verbunden. Die Stützen 21 bilden dabei vorzugsweise einen Bondrahmen aus. Die durch die Pfeile gekennzeichneten Stellen der ersten Kontaktierungsschicht 13 dienen in diesem Aufbau bevorzugt als jeweils einzelne Elektroden 7. Das auslenkfähige Element 2 selber dient als Gegenelektrode. Bei einer Auslenkung des auslenkfähigen Elements 2 um die Drehachse 5 gelangen die Endbereiche des auslenkfähigen Elements 2 im unterschiedlichen Abstand zu den beiden Elektroden 7, die durch die erste Kontaktierungsschicht 13 gebildet werden. Jeweils zwischen einer Elektrode 7 und dem auslenkfähigen Element 2 wird dabei die Kapazität gemessen. Es ist somit eine Differenzkapazitätsmessung möglich.

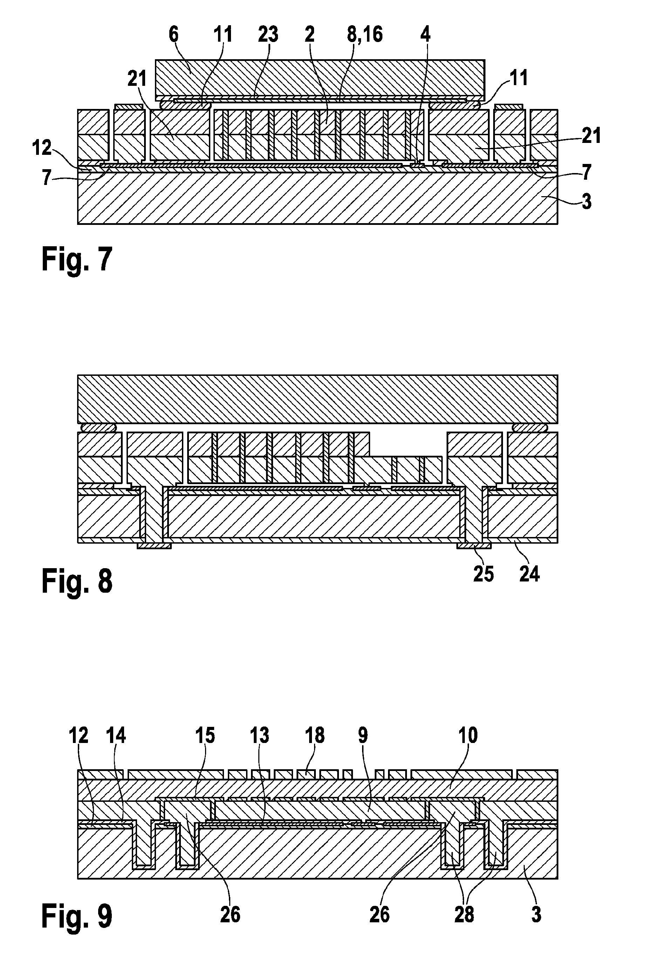

In Figur 7 ist schematisch eine andere Ausführungsform des mikromechanischen Bauelements dargestellt. In diesem Ausführungsbeispiel ist das Aufhängungselement 4 asymmetrisch bezüglich der Haupterstreckungsebene des auslenkfähigen Elements 2 angeordnet. Weiterhin steht das mikromechanische Bauelement mit einem Abdeckungselement 6 in Kontakt, wobei das Abdeckungselement 6 mittels Kontaktmitteln 11 mit den Stützen 21 verbunden ist. Die Stützen 21 werden bevorzugt durch die erste und/oder die zweite Funktionsschicht 9, 10 gebildet. Das Abdeckungselement 6 weist vorzugsweise eine leitfähige Schicht 8 - beispielsweise eine Aluminiumschicht - und eine zweite Isolationsschicht 23 auf. Die Kontaktierung der elektrisch leitfähigen Schicht 8 erfolgt bevorzugt durch eine elektrische Anbindung des Bondrahmens (gebildet durch die Stützen 21) zum Substratmaterial 3 und/oder der Kontaktierungsschicht 13 durch ein elektrisch leitfähiges Kontaktmittel 11. Die leitfähige Schicht 8 bildet in diesem Ausführungsbeispiel eine Gegenelektrode 16. Die erste Kontaktierungsschicht 13 unterhalb des auslenkfähigen Elements 2 bildet bevorzugt die Elektrode 7 und das auslenkfähige Element 2 selber bildet vorzugsweise eine Mittelelektrode. Bei einer Auslenkung des auslenkfähigen Elements 2 verändert sich dabei der Abstand zwischen der Gegenelektrode 16 des Abdeckungselements 6 und der Mittelelektrode des auslenkfähigen Elements 2 sowie zwischen der Elektrode 7 der ersten Kontaktierungsschicht 13 und dem auslenkfähigen Element 2. In einer anderen Ausgestaltung kann auch das Abdeckungselement 6 aus hochdotiertem Silizium bestehen und über die Bondverbindung und den Bondrahmen mit dem Substratmaterial 3 und/oder der Kontaktierungsschicht 13 verbunden sein. In diesem Fall ist es nicht nötig, dass das Abdeckungselement 6 eine zusätzliche leitfähige Schicht 8 aufweist, um als Gegenelektrode 16 wirksam zu sein. Eine weitere Alternative wäre eine Siliziumkappe beliebiger Dotierung als Abdeckungselement 6, auf die direkt eine Metallisierung abgeschieden wird, wobei die Metallisierung optional strukturiert wird.

Bei den bisherigen Ausführungsbeispielen sind jeweils auf einer bereits vorhandenen ersten Isolationsschicht 12 und einer ersten Kontaktierungsschicht 13 weitere Schichten - wie beispielsweise die erste und die zweite Funktionsschicht 9, 10 - erzeugt worden. Über das Maskendesign kann weiter erreicht werden, dass in definierten Bereichen das Substratmaterial 3 ohne zusätzliche Schichten vorliegt. Hierdurch ist es möglich, in diesen Bereichen während eines Epitaxieschrittes zur Erzeugung der Funktionsschichten 9, 10 monokristallines Silizium aufwachsen zu lassen, wodurch ebenfalls eine Schaltungsintegration möglich ist. Dies hat den Vorteil, dass nach der Herstellung der Schaltungskomponente, der Einfluss auf Bauteilkennlinien durch Hochtemperaturprozesse, wie zum Beispiel der einer Epitaxi, keinen Einfluss mehr haben.

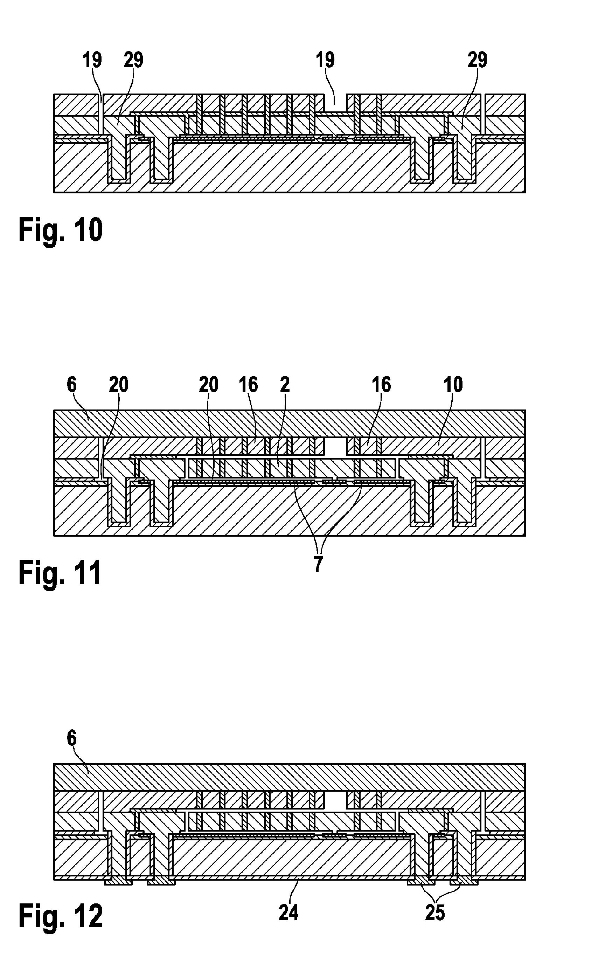

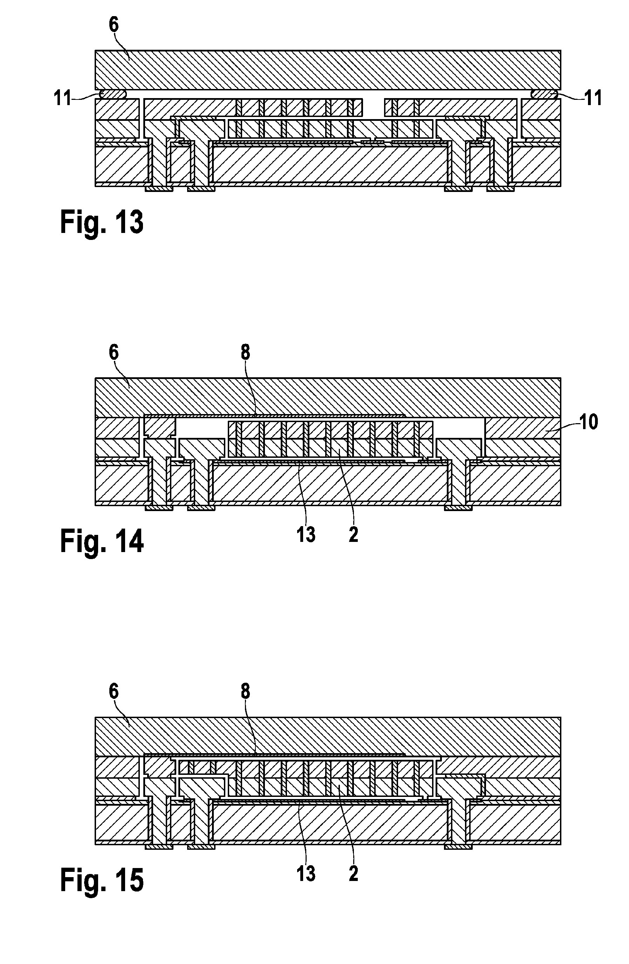

Die Figuren 8 bis 16 stellen schematisch eine Rückseitenkontaktierung einer Vorstufe 1 des mikromechanischen Bauelements dar. Hierzu weist das mikromechanische Bauelement vorzugsweise eine dritte Isolationsschicht 24 und eine Kontaktierung 25 auf. Im Gegensatz zu der bisher verwendeten ersten Funktionsschicht 9 muss die erste Funktionsschicht 9 gemäß der Figur 9 strukturiert werden. Hierdurch entstehen erste Kontaktbereiche 26 zwischen denen das später gebildete auslenkfähige Element 2 liegt. Die erste Funktionsschicht 9 gelangt dabei auch in Ausnehmungen 28 des Substratmaterials 3, wobei die erste Funktionsschicht 9 dabei bevorzugt ein Isolator ist. Die Ausnehmungen 28 sind bevorzugt durch einen Prozessschritt (beispielsweise Trenchen) vor der Aufbringung der ersten Isolationsschicht 12 und der ersten Kontaktierungsschicht 13 entstanden. Nach der Erzeugung von Trenchstrukturen 19 (Figur 10) entstehen zweite Kontaktbereiche 29. Durch die anschließende Entfernung der Schutzschicht 14 aus den Gebieten 20 entsteht das auslenkfähige Element 2, wobei eine feststehende Gegenelektrode 16 durch die zweite Funktionsschicht 10 gebildet wird. Die Elektrode 7 wird unterhalb des auslenkfähigen Elements 2 durch die Schutzschicht 13 gebildet, wobei auch hier zwei unterschiedliche und nicht zusammenhängende Abschnitte der Schutzschicht 13 jeweils eine Elektrode 7 bilden. Das auslenkfähige Element 2 bildet die bewegliche Mittelelektrode. Zur Rückseitenkontaktierung des mikromechanischen Bauelements wird anschließend die dritte Isolationsschicht 24 und die Kontaktierung 25 auf dem Substratmaterial 3 erzeugt (Figur 12). Da die Kontaktierung des mikromechanischen Bauelements von der Rückseite aus erfolgt, kann vorteilhaft ein unstrukturiertes Abdeckungselement 6, beispielsweise ein Kappenwafer aus Pyrex, zur Abdeckung des mikromechanischen Bauelements verwendet werden. Die Figuren 13 bis 16 zeigen schematisch weitere Ausgestaltungen des mikromechanischen Bauelements mit Rückseitenkontaktierung, wobei beispielsweise ein Abdeckungselement 6 mit einer leitfähigen Schicht 8 mit dem mikromechanischen Bauelement in Kontakt steht oder ein Kontaktmittel 11 zwischen dem Abdeckungselement 6 und dem Substratmaterial 3 vorgesehen ist. In der Figur 14 ist dabei schematisch dargestellt, dass durch die zweite Funktionsschicht 10 unterschiedliche Kontaktierungsbereiche geschaffen wurden. Bei der Befestigung eines Abdeckungselements 6, welches zusätzlich eine leitfähige Schicht 8 aufweist, auf die Funktionsschicht 9 oder 10, kann simultan eine elektrisch isolierende Verbindung im Bereich des Bondrahmens und eine elektrisch leitfähige Verbindung innerhalb des durch den Bondrahmen umschlossenen Innenraums entstehen. Als Beispiel sei hier die Befestigung eines Abdeckungselements 6 aus Pyrex genannt, das durch anodisches Bonden elektrisch nicht leitfähig mit der Funktionsschicht 9 oder 10 verbunden wird. Besitz diese Abdeckungselement 6 zusätzlich eine elektrisch leitfähige Schicht 8, zum Beispiel aus Aluminium, kann in dem gleichen Verbindungsprozess eine elektrisch leitfähige Verbindung, zu isoliert ausgeführten Bereichen in der Funktionschicht 9 und/oder 10, geschaffen werden. Da beim anodischen Bonden das Abdeckungselement 6 direkt auf der Funktionsschicht 9 oder 10 zu liegen kommt, muss im Bereich der beweglichen Strukturen (auslenkfähiges Element 2) eine Vertiefung in die Funktionsschicht 9 oder 10 eingebracht werden, um die Beweglichkeit des auslenkfähigen Elements 2 sicherstellen zu können. Dies ist nicht zwingend notwendig bei der Verwendung von elektrisch leitfähigen bzw. nicht leitfähigen Kontaktmitteln, da diese bereits zu einer Beabstandung zwischen Abdeckungselement 6 und Funktionsschicht 9 oder 10 führt.

Figur 17 stellt schematisch das auslenkfähige Element 2 dar, wobei ein erster Teilbereich 33 des auslenkfähigen Elements 2 und ein zweiter Teilbereich 34 des auslenkfähigen Elements 2 eine Stufe bilden. Der erste Teilbereich 33 weist dabei eine Höhe senkrecht zur Haupterstreckungsebene des auslenkfähigen Elements 2 auf die größer ist als die Höhe des zweiten Teilbereichs 34 senkrecht zur Haupterstreckungsebene des auslenkfähigen Elements 2. Bei einer gleichen Materialdichte des ersten Teilbereichs 33 und des zweiten Teilbereichs 34 und im Wesentlichen gleichem Abstand der Teilbereiche 33, 34 zur Drehachse 5 weist somit der erste Teilbereich 34 (in der Figur 17 links von der Drehachse 5) ein größeres Massenträgheitsmoment auf, als der zweite Teilbereich 34 (in der Figur 17 rechts von der Drehachse 5). In Figur 17 steht eine Ebene 35 im Wesentlichen senkrecht auf der Grundfläche 36 des auslenkfähigen Elements 2, wobei die Grundfläche 36 über das Aufhängungselement 4 mit dem Substratmaterial 3 in Kontakt steht und dem Substratmaterial 3 zugewandt ist. Wenn die Ebene 35 die Grundfläche 36 in zwei im Wesentlichen gleich große Flächenbereiche teilt, ist das auslenkfähige Element 2 durch das Aufhängungselement 4 im Wesentlichen zentrisch aufgehängt.

## Patentansprüche

1. Mikromechanisches Bauelement, wobei das mikromechanische Bauelement ein auslenkfähiges Element (2), ein Substratmaterial (3) und ein Aufhängungselement (4) aufweist, wobei das auslenkfähige Element (2) durch das Aufhängungselement (4) mit dem Substratmaterial (3) verbunden ist und das auslenkfähige Element (2) um eine Drehachse (5) kippbar auslenkbar ist, wobei die Drehachse (5) durch das Aufhängungselement (4) verläuft, wobei das auslenkfähige Element (2) durch eine Ebene (35) in einen ersten Teilbereich (33) und einen zweiten Teilbereiche (34) aufteilbar ist, wobei die Ebene (35) im Wesentlichen senkrecht auf der Haupterstreckungsebene des auslenkfähigen Elements (2) steht, wobei der erste Teilbereich (33) ein größeres Massenträgheitsmoment aufweist als der zweite Teilbereich (34), wobei zudem die Ebene (35) im wesentlichen senkrecht auf einer dem Substratmaterial (3) zugewanden Grundfläche (36) des schwingfähigen Elements (2) steht, **dadurch gekennzeichnet, dass** die Ebene (35) diese Grundfläche (36) in zwei im Wesentlichen gleich große Flächenbereiche aufteilt und durch das Aufhängungselement (4) verläuft.

2. Mikromechanisches Bauelement nach Anspruch 1, **dadurch gekennzeichnet, dass** eine Auslenkung des auslenkfähigen Elements (2) mittels einer Differenzkapazitätsmessung bestimmbar ist.

3. Mikromechanisches Bauelement nach dem Oberbegriff des Anspruchs 1, wobei das mikromechanische Bauelement ein Abdeckungselement (6) aufweist, wobei eine Auslenkung des auslenkfähigen Elements (2) mittels einer Differenzkapazitätsmessung bestimmbar ist, **dadurch gekennzeichnet, dass** das Abdeckungselement (6) eine leitfähige Schicht (8) als eine Gegenelektrode (16) zur Differenzkapazitätsmessung aufweist.

4. Mikromechanisches Bauelement nach Anspruch 3, **dadurch gekennzeichnet, dass** die Ebene (35) durch das Aufhängungselement (4) verläuft und die Grundfläche (36) in zwei im Wesentlichen gleich große Flächenbereiche oder in zwei unterschiedlich große Flächenbereiche aufteilt.

5. Mikromechanisches Bauelement nach einem der vorhergehenden Ansprüche, **dadurch gekennzeichnet, dass** das mikromechanische Bauelement eine Rückseitenkontaktierung aufweist.

6. Mikromechanisches Bauelement nach einem der vorhergehenden Ansprüche, **dadurch gekennzeichnet, dass** das mikromechanische Bauelement eine erste und/oder eine zweite Funktionsschicht (9, 10) aufweist.

7. Mikromechanisches Bauelement nach einem der vorhergehenden Ansprüche, **dadurch gekennzeichnet, dass** das mikromechanische Bauelement mittels eines Kontaktmittels (11) mit dem Abdeckungselement (6) in Kontakt steht.

8. Mikromechanisches Bauelement nach einem der vorhergehenden Ansprüche, **dadurch gekennzeichnet, dass** das Kontaktmittel (11) elektrisch leitfähig ist, wenn eine elektrische Verbindung zwischen dem Abdeckungselement (6) und/oder der leitfähigen Schicht (8) und der ersten und/oder zweiten Funktionsschicht (9, 10) besteht.

9. Verfahren zur Herstellung eines mikromechanischen Bauelements nach einem der Ansprüche 1 bis 8, wobei auf einem Substratmaterial (3) eine erste Isolationsschicht (12) und/oder eine erste Kontaktierungsschicht (13) erzeugt werden, wobei über der ersten Isolationsschicht (12) und/oder der ersten Kontaktierungsschicht (13) zumindest teilweise eine Schutzschicht (14) erzeugt wird, **dadurch gekennzeichnet, dass** über der ersten Isolationsschicht (12) und/oder der ersten Kontaktierungsschicht (13) und der Schutzschicht (14) eine erste Funktionsschicht (9), eine erste Maskenschicht (15) und eine zweite Funktionsschicht (10) erzeugt werden, wobei die erste Maskenschicht (15) zwischen der ersten und der zweiten Funktionsschicht (9, 10) liegt und die zweite Funktionsschicht (10) über der ersten Funktionsschicht (9) erzeugt wird.

10. Verfahren nach Anspruch 9, **dadurch gekennzeichnet, dass** auf Teilbereichen der zweiten Funktionsschicht (10) eine zweite Kontaktierungsschicht (17) erzeugt wird und/oder eine zweite Maskenschicht (18) über der zweiten Funktionsschicht (10) und/oder über der zweiten Kontaktierungsschicht (17) erzeugt wird.

11. Verfahren zur Herstellung eines mikromechanischen Bauelements nach Anspruch 9 oder 10, **dadurch gekennzeichnet, dass** bei einem ersten Trenchprozess Trenchstrukturen (19) erzeugt werden, wobei der Trenchprozess durch das Erreichen der ersten Maskenschicht (15) oder durch das Erreichen der Schutzschicht (14) gestoppt wird.

12. Verfahren zur Herstellung eines mikromechanischen Bauelements nach einem der vorhergehenden Ansprüche, **dadurch gekennzeichnet, dass** bei einem Ätzschritt zumindest teilweise die Schutzschicht (14) entfernt wird, wobei hierdurch das auslenkfähige Element (2) auslenkfähig wird.

13. Verfahren zur Herstellung eines mikromechanischen Bauelements nach einem der vorhergehenden Ansprüche, **dadurch gekennzeichnet, dass** ein Abdeckungselement (6) mit oder ohne leitfähiger Schicht (8) direkt oder indirekt mittels eines Kontaktmittels (11 ) mit der ersten oder der zweiten Funktionsschicht (9, 10) befestigt wird.

14. Verwendung eines mikromechanischen Bauelements nach einem der Ansprüche 1 bis 8 als Z-Beschleunigungssensor.
